# EUROPEAN PATENT SPECIFICATION

(11) **EP 3 315 864 B1**
(45) Date of publication and mention of the grant of the patent: **28.07.2021**
(21) Application number: 17198181.4
(22) Date of filing: 25.10.2017
(51) Int. Cl.: F23R 3/00, F23R 3/06, F23R 3/04

(54) **CAST COMBUSTOR LINER PANEL WITH RADIUSED DILUTION PASSAGE GROMMET FOR A GAS TURBINE ENGINE COMBUSTOR**
GEGOSSENE BRENNKAMMERAUSKLEIDUNGSPLATTE MIT ABGERUNDETER VERDÜNNUNGSDURCHGANGSHÜLSE FÜR EINE GASTURBINENMOTORBRENNKAMMER
PANNEAU DE REVÊTEMENT DE COMBUSTION COULÉ À ILLET DE PASSAGE DE DILUTION ARRONDI POUR CHAMBRE DE COMBUSTION DE MOTEUR DE TURBINE À GAZ

(30) Priority: 26.10.2016 US 201615334833
(43) Date of publication of application: 02.05.2018
(73) Proprietor: Raytheon Technologies Corporation, Farmington, CT 06032 (US)
(72) Inventor: EASTWOOD, Jonathan Jeffery, West Hartford, Connecticut 06117 (US); MOURA, Dennis M., South Windsor, Connecticut 06074 (US); HAZEL, Brian T., Avon, CT Connecticut 06001 (US); WERKHEISER, William F., East Hartford, CT Connecticut 06118 (US)
(74) Representative: Dehns

(56) References cited:
- WO-A1-2015/100346
- GB-A- 2 353 589
- US-A- 4 805 397
- US-A1- 2010 251 723
- US-A1- 2015 241 063

## Description

### BACKGROUND

The present invention relates to a gas turbine engine and, more particularly, to a combustor section therefor.

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases.

Among the engine components, relatively high temperatures are observed in the combustor section such that cooling airflow is provided to meet desired service life requirements. The combustor section typically includes a combustion chamber formed by an inner and outer wall assembly. Each wall assembly includes a support shell lined with heat shields often referred to as liner panels. In certain combustion architectures, dilution passages direct airflow to condition air within the combustion chamber.

In typical combustor chamber designs, combustor Impingement Film-Cooled Floatwall (IFF) liner panels are typically a curved flat surface on a hot side exposed to the gas path. The opposite, or cold side, has features such as cast in threaded studs to mount the liner panel and a full perimeter rail that contact the inner surface of the liner shells.

In addition to the dilution passages, the shells may have relatively small air impingement passages to direct cooling air to impingement cavities between the support shell and the liner panels. This cooling air exits numerous effusion passages through the liner panels to effusion cool the passages and film cool a hot side of the liner panels to reduce direct exposure to the combustion gases.

With lower emissions requirements and higher combustor operational temperatures, cffcctivc dilution passage grommcts may be of increased significance.

US 2010/0251723 A1 discloses a method for cooling a combustor assembly, the method comprising inserting a thimble into an opening in a sleeve such that cooling air is discharged from a flow channel into the cooling passage.

US 2015/241063 discloses a grommet according to the preamble of claim 1, including a body portion and a lip that projects from the body portion. The body portion and the lip carry a surface that extends around a passage through the grommet.

GB2353589 A discloses a wall structure for a gas turbine engine including inner and outer walls. A mixing port is provided in the wall structure for providing air to a combustor.

### SUMMARY

According to the invention, a liner panel for use in a combustor of a gas turbine engine as claimed in claim 1 is provided. Further developments of the invention are set forth in the dependent claims.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment of the invention. The drawings that accompany the detailed description can be briefly described as follows:
Figure 1 is a schematic cross-section of an example gas turbine engine architecture;
Figure 2 is an expanded longitudinal schematic sectional view of a combustor section according to one non-limiting embodiment that may be used with the example gas turbine engine architectures;
Figure 3 is an exploded partial sectional view of a portion of a combustor wall assembly;
Figure 4 is a perspective cold side view of a portion of a liner panel array;
Figure 5 is a perspective partial sectional view of a combustor;
Figure 6 is a sectional view of a portion of a combustor wall assembly showing an impingement and film cooling airflow;
Figure 7 is a perspective view of a cold side of a liner panel;
Figure 8 is a sectional view of the annular grommet; and
Figure 9 is an expanded sectional view of one side of the annular grommet of Figure 8 illustrating the radiused edges according to one disclosed non-limiting embodiment.

### DETAILED DESCRIPTION

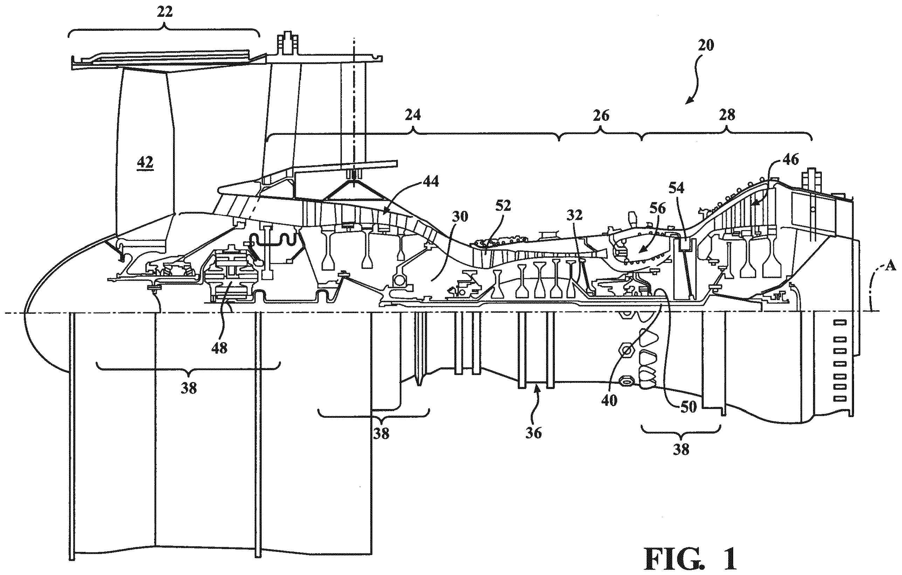

Figure 1 schematically illustrates a gas turbine engine 20. The gas turbine engine 20 is disclosed herein as a two-spool turbo fan that generally incorporates a fan section 22, a compressor section 24, a combustor section 26 and a turbine section 28. Alternative engine architectures 200 might include an augmentor section among other systems or features. The fan section 22 drives air along a bypass flowpath and into the compressor section 24. The compressor section 24 drives air along a core flowpath for compression and communication into the combustor section 26, which then expands and directs the air through the turbine section 28. Although depicted as a turbofan in the disclosed non-limiting embodiment, it should be appreciated that the concepts described herein are not limited to use with turbofans as the teachings may be applied to other types of turbine engines such as a turbojets, turboshafts, and three-spool (plus fan) turbofans wherein an intermediate spool includes an intermediate pressure compressor ("IPC") between a Low Pressure Compressor ("LPC") and a High Pressure Compressor ("HPC"), and an intermediate pressure turbine ("IPT") between the high pressure turbine ("HPT") and the Low pressure Turbine ("LPT").

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor ("LPC") 44 and a low pressure turbine ("LPT") 46. The inner shaft 40 drives the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor ("HPC") 52 and high pressure turbine ("HPT") 54. A combustor 56 is arranged between the HPC 52 and the HPT 54. The inner shaft 40 and the outer shaft 50 are concentric and rotate about the engine central longitudinal axis A which is collinear with their longitudinal axes.

Core airflow is compressed by the LPC 44, then the HPC 52, mixed with the fuel and burned in the combustor 56, then expanded over the HPT 54 and the LPT 46. The LPT 46 and HPT 54 rotationally drive the respective low spool 30 and high spool 32 in response to the expansion. The main engine shafts 40, 50 are supported at a plurality of points by bearing systems 38 within the static structure 36.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the LPC 44 and LPT 46 and render increased pressure in a fewer number of stages.

A pressure ratio associated with the LPT 46 is pressure measured prior to the inlet of the LPT 46 as related to the pressure at the outlet of the LPT 46 prior to an exhaust nozzle of the gas turbine engine 20. In one non-limiting embodiment, the bypass ratio of the gas turbine engine 20 is greater than about ten (10:1), the fan diameter is significantly larger than that of the LPC 44, and the LPT 46 has a pressure ratio that is greater than about five (5:1). It should be appreciated, however, that the above parameters are only exemplary of one embodiment of a geared architecture engine and that the present disclosure is applicable to other gas turbine engines including direct drive turbofans.

In one embodiment, a significant amount of thrust is provided by the bypass flow path due to the high bypass ratio. The fan section 22 of the gas turbine engine 20 is designed for a particular flight condition - typically cruise at about 0.8 Mach and about 35,000 feet (10668m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of ("Tram" / 518.7)^{0.5}. The Low Corrected Fan Tip Speed according to one non-limiting embodiment of the example gas turbine engine 20 is less than about 1150 fps (351 m/s).

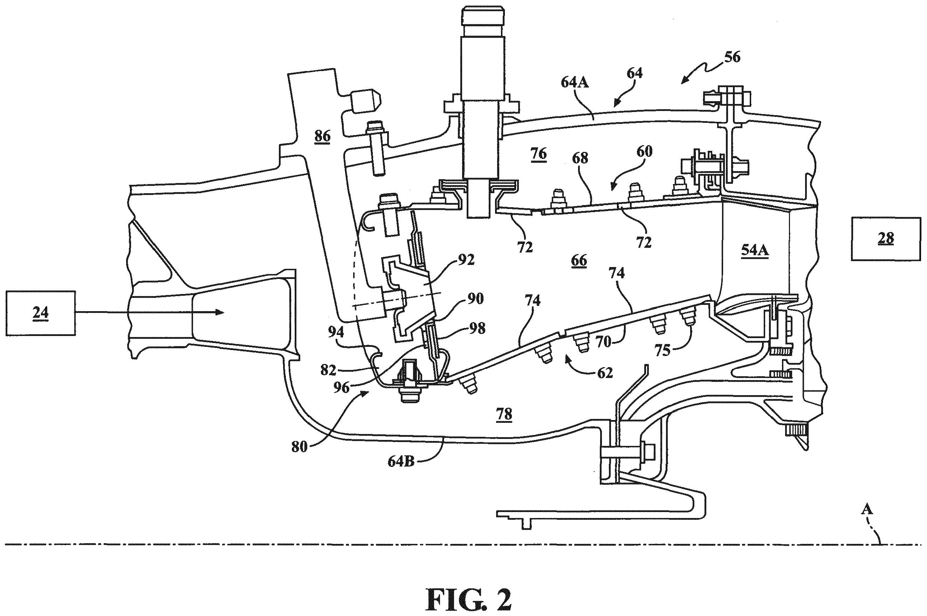

With reference to Figure 2, the combustor section 26 generally includes a combustor 56 with an outer combustor wall assembly 60, an inner combustor wall assembly 62, and a diffuser case module 64. The outer combustor wall assembly 60 and the inner combustor wall assembly 62 are spaced apart such that a combustion chamber 66 is defined therebetween. The combustion chamber 66 is generally annular in shape to surround the engine central longitudinal axis A.

The outer combustor liner assembly 60 is spaced radially inward from an outer diffuser case 64A of the diffuser case module 64 to define an outer annular plenum 76. The inner combustor liner assembly 62 is spaced radially outward from an inner diffuser case 64B of the diffuser case module 64 to define an inner annular plenum 78. It should be appreciated that although a particular combustor is illustrated, other combustor types with various combustor liner arrangements will also benefit herefrom. It should be further appreciated that the disclosed cooling flow paths are but an illustrated embodiment and should not be limited only thereto.

The combustor wall assemblies 60, 62 contain the combustion products for direction toward the turbine section 28. Each combustor wall assembly 60, 62 generally includes a respective support shell 68, 70 which supports one or more liner panels 72, 74 mounted thereto arranged to form a liner array. The support shells 68, 70 may be manufactured by, for example, the hydroforming of a sheet metal alloy to provide the generally cylindrical outer shell 68 and inner shell 70. Each of the liner panels 72, 74 may be generally rectilinear with a circumferential arc. The liner panels 72, 74 may be manufactured of, for example, a nickel based super alloy, ceramic or other temperature resistant material. In one disclosed non-limiting embodiment, the liner array includes a multiple of forward liner panels 72A and a multiple of aft liner panels 72B that are circumferentially staggered to line the outer shell 68. A multiple of forward liner panels 74A and a multiple of aft liner panels 74B are circumferentially staggered to line the inner shell 70.

The combustor 56 further includes a forward assembly 80 immediately downstream of the compressor section 24 to receive compressed airflow therefrom. The forward assembly 80 generally includes a cowl 82, a bulkhead assembly 84, and a multiple of swirlers 90 (one shown). Each of the swirlers 90 is circumferentially aligned with one of a multiple of fuel nozzles 86 (one shown) and the respective hood ports 94 to project through the bulkhead assembly 84.

The bulkhead assembly 84 includes a bulkhead support shell 96 secured to the combustor walls 60, 62, and a multiple of circumferentially distributed bulkhead liner panels 98 secured to the bulkhead support shell 96 around the swirler opening. The bulkhead support shell 96 is generally annular and the multiple of circumferentially distributed bulkhead liner panels 98 are segmented, typically one to each fuel nozzle 86 and swirler 90.

The cowl 82 extends radially between, and is secured to, the forwardmost ends of the combustor walls 60, 62. The cowl 82 includes a multiple of circumferentially distributed hood ports 94 that receive one of the respective multiple of fuel nozzles 86 and facilitates the direction of compressed air into the forward end of the combustion chamber 66 through a swirler opening 92. Each fuel nozzle 86 may be secured to the diffuser case module 64 and project through one of the hood ports 94 and through the swirler opening 92 within the respective swirler 90.

The forward assembly 80 introduces core combustion air into the forward section of the combustion chamber 66 while the remainder enters the outer annular plenum 76 and the inner annular plenum 78. The multiple of fuel nozzles 86 and adjacent structure generate a blended fuel-air mixture that supports stable combustion in the combustion chamber 66.

Opposite the forward assembly 80, the outer and inner support shells 68, 70 are mounted to a first row of Nozzle Guide Vanes (NGVs) 54A in the HPT 54. The NGVs 54A are static engine components which direct core airflow combustion gases onto the turbine blades of the first turbine rotor in the turbine section 28 to facilitate the conversion of pressure energy into kinetic energy. The core airflow combustion gases are also accelerated by the NGVs 54A because of their convergent shape and are typically given a "spin" or a "swirl" in the direction of turbine rotor rotation. The turbine rotor blades absorb this energy to drive the turbine rotor at high speed.

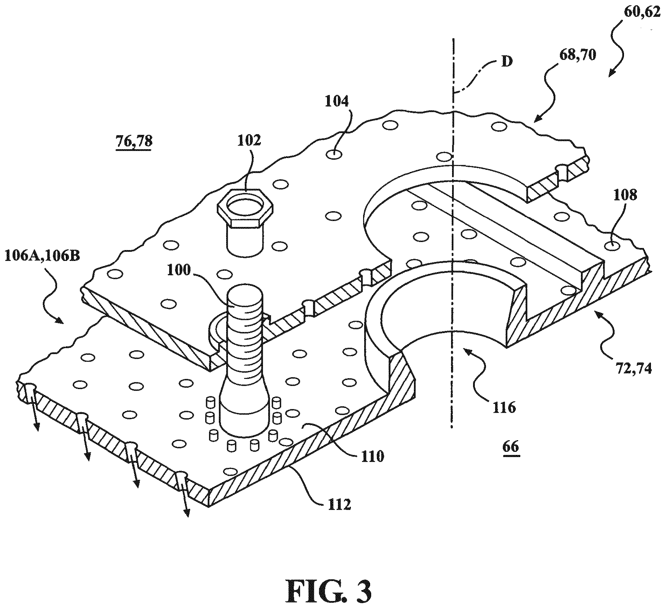

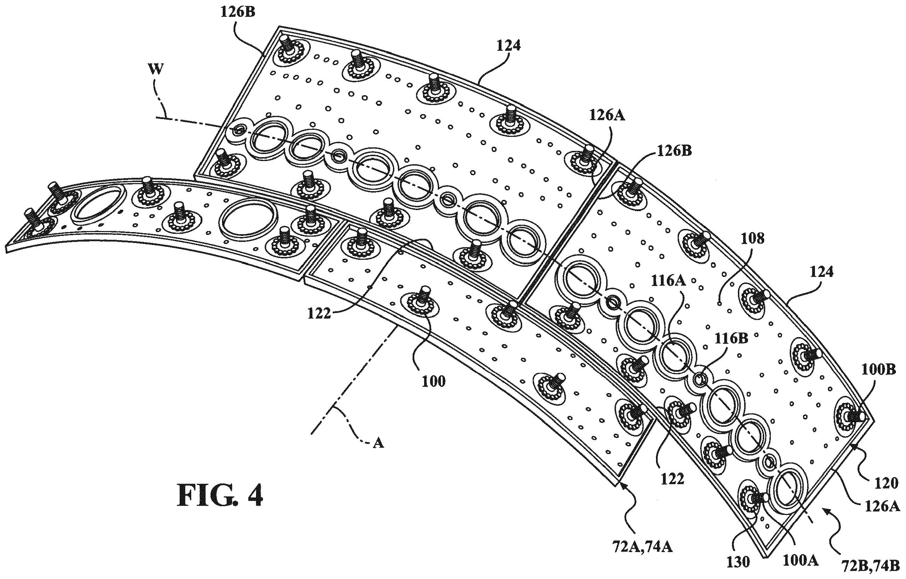

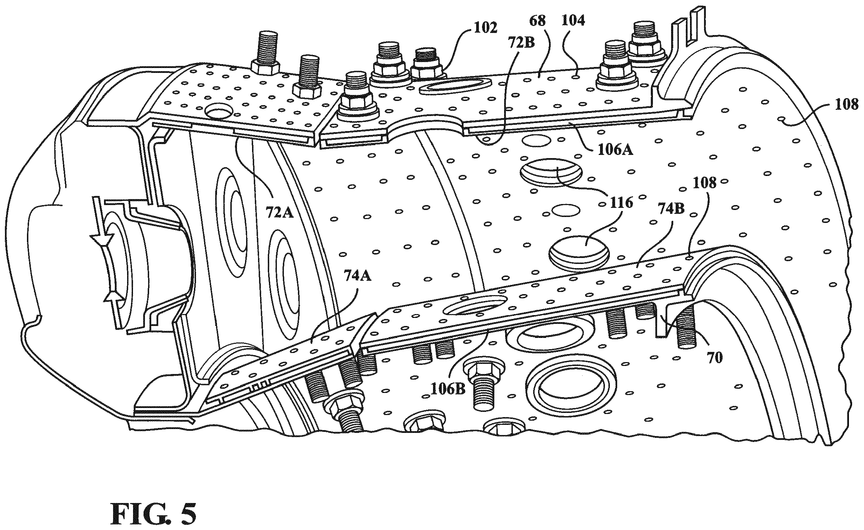

With reference to Figure 3, a multiple of studs 100 extend from each of the liner panels 72, 74 so as to permit a liner array (partially shown in Figure 4) of the liner panels 72, 74 to be mounted to their respective support shells 68, 70 with fasteners 102 such as nuts. That is, the studs 100 project rigidly from the liner panels 72, 74 to extend through the respective support shells 68, 70 and receive the fasteners 102 on a threaded section thereof (Figure 5).

A multiple of cooling impingement passages 104 penetrate through the support shells 68, 70 to allow air from the respective annular plenums 76, 78 to enter cavities 106 formed in the combustor walls 60, 62 between the respective support shells 68, 70 and liner panels 72, 74. The impingement passages 104 are generally normal to the surface of the liner panels 72, 74. The air in the cavities 106 provides cold side impingement cooling of the liner panels 72, 74 that is generally defined herein as heat removal via internal convection.

A multiple of effusion passages 108 penetrate through each of the liner panels 72, 74. The geometry of the passages, e.g., diameter, shape, density, surface angle, incidence angle, etc., as well as the location of the passages with respect to the high temperature combustion flow also contributes to effusion cooling. The effusion passages 108 allow the air to pass from the cavities 106 defined in part by a cold side 110 of the liner panels 72, 74 to a hot side 112 of the liner panels 72, 74 and thereby facilitate the formation of a thin, relatively cool, film of cooling air along the hot side 112.

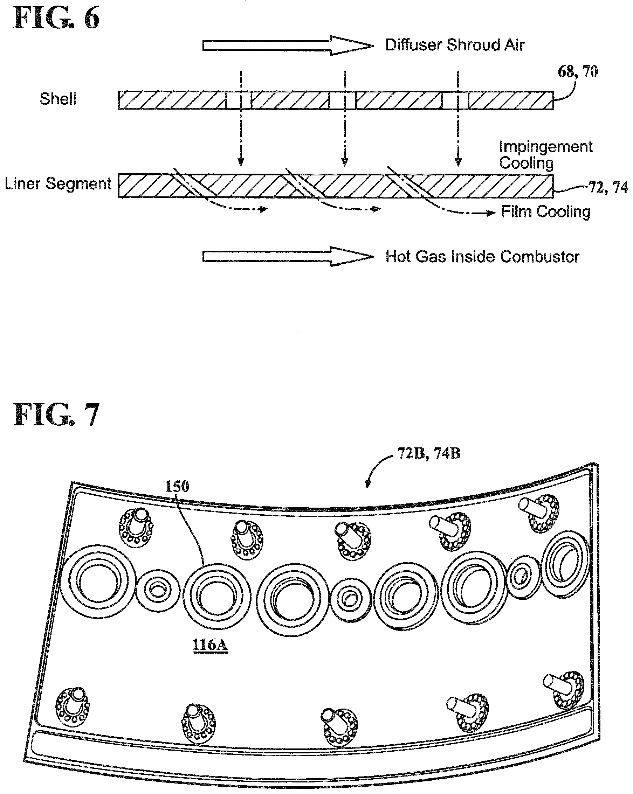

In one disclosed non-limiting embodiment, each of the multiple of effusion passages 108 are typically about 0.025" (0.635 mm) in diameter and define a surface angle of about thirty (30) degrees with respect to the cold side 110 of the liner panels 72, 74. The effusion passages 108 are generally more numerous than the impingement passages 104 and promote film cooling along the hot side 112 to sheath the liner panels 72, 74 (Figure 6). Film cooling as defined herein is the introduction of a relatively cooler air at one or more discrete locations along a surface exposed to a high temperature environment to protect that surface in the region of the air injection as well as downstream thereof.

The combination of impingement passages 104 and effusion passages 108 may be referred to as an Impingement Film Floatwall (IFF) assembly. A multiple of dilution passages 116 are located in the liner panels 72, 74 each along a common axis D. For example only, the dilution passages 116 are located in a circumferential line W (shown partially in Figure 4). Although the dilution passages 116 are illustrated in the disclosed non-limiting embodiment as within the aft liner panels 72B, 74B, the dilution passages may alternatively be located in the forward liner panels 72A, 72B or in a single liner panel which replaces the fore/aft liner panel array. Further, the dilution passages 116 although illustrated in the disclosed non-limiting embodiment as integrally formed in the liner panels, it should be appreciated that the dilution passages 116 may be separate components. Whether integrally formed or separate components, the dilution passages 116 may be referred to as grommets.

With reference to Figure 4, in one disclosed non-limiting embodiment, each of the liner panels 72A, 72B, 74A, 74B in the liner panel array includes a perimeter rail 120 formed by a forward circumferential rail 122, an aft circumferential rail 124, and axial rails 126A, 126B, that interconnect the forward and aft circumferential rail 122, 124. The perimeter rail 120 seals each liner panel with respect to the respective support shell 68, 70 to form the impingement cavity 106 therebetween. That is, the forward and aft circumferential rail 122, 124 are located at relatively constant curvature shell interfaces while the axial rails 126 extend across an axial length of the respective support shell 68, 70 to complete the perimeter rail 120 that seals the liner panels 72, 74 to the respective support shell 68, 70.

A multiple of studs 100 are located adjacent to the respective forward circumferential rail 122 and the aft circumferential rail 124. Each of the studs 100 may be at least partially surrounded by posts 130 to at least partially support the fastener 102 and provide a stand-off between each liner panels 72B, 74B and respective support shell 68, 70.

The dilution passages 116 are located downstream of the forward circumferential rail 122 in the aft liner panels 72B, 74B to quench the hot combustion gases within the combustion chamber 66 by direct supply of cooling air from the respective annular plenums 76, 78. That is, the dilution passages 116 pass air at the pressure outside the combustion chamber 66 directly into the combustion chamber 66.

This dilution air is not primarily used for cooling of the metal surfaces of the combustor shells or panels, but to condition the combustion products within the combustion chamber 66. In this disclosed non-limiting embodiment, the dilution passages 116 includes at least one set of circumferentially alternating major dilution passages 116A and minor dilution passages 116B (also shown in Figure 6). That is, in some circumferentially offset locations, two major dilution passages 116A are separated by one minor dilution passages 116B. Here, every two major dilution passages 116A are separated by one minor dilution passages 116B but may still be considered "circumferentially alternating" as described herein.

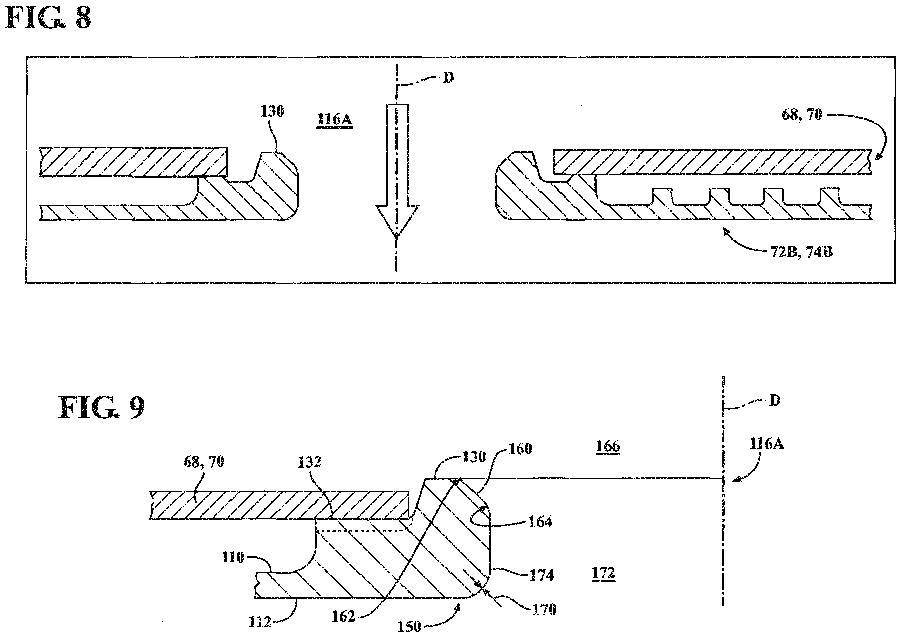

With reference to Figure 7, a single example liner panel is illustrated, however, each, or particular, liner panels may benefit herefrom. At least one of the multiple of dilution passage 116 in one disclosed non-limiting embodiment is defined by an annular grommet 151 that forms a flow path through the respective support shell 68, 70 and associated liner panels 72, 74 along axis D (Figure 8). The annular grommet 151 may be an assembly of a multiple of pieces that is brazed or otherwise mounted to the liner panels 72, 74. Alternatively, the annular grommet 151 may be integral with the liner panel 72, 74 and manufactured via, for example, casting or an additive manufacturing process.

In one disclosed non-limiting embodiment, each of the major dilution passages 116A is about 0.5" (12.7 mm) in diameter and the total number of major dilution passages 116A communicates about eighty-five percent (85%) of the dilution airflow. The minor dilution passages 116B are each about 0.2" (5.1 mm) in diameter and the total number of minor dilution passages 116B communicates about fifteen percent (15%) of the dilution airflow. It should be appreciated that the dilution passages 116a, 116B need not be circular.

With reference to Figure 9, each major dilution passage 116A includes a lip 130 that may extend above the respective shell 68, 70 when the liner panel 72, 74 is mounted thereto. The lip 130 is surrounded by a seal boss 132 upon which the respective shell 68, 70 is supported and slides in response to thermal excursions and mechanical tolerances. The seal boss 132 generally extends parallel to the cold side 110 and is raised therefrom. An example seal boss with respect to this disclosed non-limiting embodiment defines an inner diameter - just outside the lip 130 - of about 0.64" (16.3 mm) and an outer diameter of about 0.7" (17.8 mm).

The annular grommet 151 of the dilution passage includes a chamfer 160, a first radius 162 and a second radius 164 adjacent to an entry 166 of the dilution passage 116A along the common axis D. A third radius 170 is located adjacent to an exit 172 of the dilution passage 116A to blend an inner bore surface 174 into the hot side 112.

In one embodiment, the chamfer 160 is defined at forty-five (45) degrees with respect to axis D, and the first radius 162 and the second radius 164 may be between about 0.044 -0.075 inches (1.1-1.9 mm) as cast in to the liner panel. The third radius 166 likewise may be between about 0.044 -0.075 inches (1.1-1.9 mm) as cast in to the liner panel. It should be appreciated that other radiuses may be of other dimensions to correspond with a coating that is applied to the hot side 112 of the liner panel to facilitate a reduction in chipping.

The first, second, and third radius 162, 164, 170, facilitates application of the coating that increases the oxidation life. That is, the hot side 112 and annular grommet 151 of each liner panel of the liner panel array may be coated to provide thermal barrier, environmental barrier, and/or other capabilities required to survive in a high-temperature environment. The coating may be a thermal barrier coating (TBC) that includes a bond coat and a top coat. The bond coat, in one non-limiting example, may be a nickel-based alloy material, while the top coat may be a ceramic material that is applied via a plasma or other spray coating system. In some non-limiting embodiments, the top coat may be thicker than the bond coat. As the coating is a ceramic mix it is common to have chipping at area of the part, which have sharp edges. The radiused gates 150, 152, 154, 156, significantly reduce the chance of chipping.

The use of the terms "a" and "an" and "the" and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. A liner panel (72, 74) for use in a combustor of a gas turbine engine, the liner panel (72, 74) comprising:
a grommet (151) that forms a lip (130); and
a seal boss (132) surrounding the lip (130), wherein a support shell (68, 70) is supported and
slides on the seal boss (132) in response to thermal excursions and mechanical tolerances in use,
the lip (130) including a chamfer (160) with a first radius (162) and a second radius (164) adjacent to an entry (166) of a dilution passage (116A) defined by the grommet (151),
**characterized in that** the liner panel (72, 74) further comprises a third radius (170) at an exit (172) of the dilution passage (116A), wherein the third radius (170) is located adjacent to the exit (172) of the dilution passage (116A) to blend an inner bore wall surface (174) of the dilution passage (116A) into the hot side (112), wherein the first, second and third radius (162, 164, 170) facilitates application of a coating that increases the oxidation life of the liner panel (72, 74).

2. The liner panel (72, 74) as recited in claim 1, wherein the grommet (151) is formed in the liner panel (72, 74).

3. The liner panel (72, 74) as recited in claim 1 or 2, wherein said lip (130) is configured to extend above the support shell (68, 70) when the liner panel (72, 74) is mounted thereto.

4. The liner panel (72, 74) as recited in any preceding claim, wherein the chamfer (160) is about 45 degrees with respect to a central axis of the dilution passage (116A).

5. The liner panel (72, 74) as recited in any preceding claim, wherein the first radius (162) is blended into a surface of the lip (130) that is parallel to the seal boss (132).

6. The liner panel (72, 74) as recited in any preceding claim, wherein the second radius (164) is blended into an inner bore wall surface of the dilution passage (116A).

7. The liner panel (72, 74) as recited in any preceding claim, wherein the grommet (151) is integral with the liner panel (72, 74).

8. The liner panel (72, 74) as recited in any preceding claim, further comprising a coating on the grommet (151).

9. The liner panel (72, 74) as recited in claim 8, wherein the coating is a thermal barrier coating.

10. The liner panel (72, 74) as recited in claim 9, wherein the thermal barrier coating includes a bond coat and a top coat.

11. The liner panel (72, 74) as recited in any preceding claim, wherein the grommet (151) and the liner panel (72, 74) are integrally cast.

## Patentansprüche

1. Auskleidungsplatte (72, 74) zur Verwendung in einer Brennkammer eines Gasturbinentriebwerks, wobei die Auskleidungsplatte (72, 74) Folgendes umfasst:
ein Hülse (151), welche eine Lippe (130) bildet; und
eine Dichtungsnabe (132), welche die Lippe (130) umgibt, wobei eine Stützhülle (68, 70) gestützt wird, und
auf die Nabe (132) gleitet als Reaktion auf thermische Abweichungen und mechanische Toleranzen bei der Verwendung,
wobei die Lippe (130) eine Abschrägung (160) mit einem ersten Radius (162) und einem zweiten Radius (164) benachbart zu einem Eingang (166) eines Verdünnungsdurchgangs (116A) beinhaltet, welcher durch die Hülse (151) definiert ist,
**dadurch gekennzeichnet, dass** die Auskleidungsplatte (72, 74) ferner einen dritten Radius (170) an einem Ausgang (172) des Verdünnungsdurchgangs (116A) umfasst, wobei sich der dritte Radius (170) benachbart zu dem Ausgang (172) des Verdünnungsdurchgangs (116A) befindet, um eine Wandfläche (174) einer inneren Bohrung des Verdünnungsdurchgangs (116A) in die heiße Seite (112) einzufügen, wobei der erste, zweite und dritte Radius (162, 164, 170) ein Auftragen einer Beschichtung erleichtert, welche die Oxidationslebensdauer der Auskleidungsplatte (72, 74) erhöht.

2. Auskleidungsplatte (72, 74) nach Anspruch 1, wobei die Hülse (151) in der Auskleidungsplatte (72, 74) gebildet ist.

3. Auskleidungsplatte (72, 74) nach Anspruch 1 oder 2, wobei die Lippe (130) dazu konfiguriert ist, sich über der Stützhülle (68, 70) zu erstrecken, wenn die Auskleidungsplatte (72, 74) daran befestigt ist.

4. Auskleidungsplatte (72, 74) nach einem der vorstehenden Ansprüche, wobei die Abschrägung (160) ungefähr 45 Grad beträgt bezogen auf eine Mittelachse des Verdünnungsdurchgangs (116A).

5. Auskleidungsplatte (72, 74) nach einem der vorstehenden Ansprüche, wobei der erste Radius (162) in eine Fläche der Lippe (130) eingefügt ist, welche parallel zu der Dichtungsnabe (132) ist.

6. Auskleidungsplatte (72, 74) nach einem der vorstehenden Ansprüche, wobei der zweite Radius (164) in eine Wandfläche einer inneren Bohrung des Verdünnungsdurchgangs (116A) eingefügt ist.

7. Auskleidungsplatte (72, 74) nach einem der vorstehenden Ansprüche, wobei die Hülse (151) einstückig mit der Auskleidungsplatte (72, 74) ist.

8. Auskleidungsplatte (72, 74) nach einem der vorstehenden Ansprüche, ferner umfassend eine Beschichtung auf der Hülse (151).

9. Auskleidungsplatte (72, 74) nach Anspruch 8, wobei die Beschichtung eine thermische Schutzbeschichtung ist.

10. Auskleidungsplatte (72, 74) nach Anspruch 9, wobei die thermische Schutzbeschichtung eine Haftschicht und eine Deckschicht beinhaltet.

11. Auskleidungsplatte (72, 74) nach einem der vorstehenden Ansprüche, wobei die Hülse (151) und die Auskleidungsplatte (72, 74) einstückig gegossen sind.

## Revendications

1. Panneau de revêtement (72, 74) destiné à être utilisé dans une chambre de combustion d'un moteur à turbine à gaz, le panneau de revêtement (72, 74) comprenant :
un œillet (151) qui forme une lèvre (130) ; et
un bossage d'étanchéité (132) entourant la lèvre (130), dans lequel une coque de support (68, 70) est supportée et
coulisse sur le bossage d'étanchéité (132) en réponse aux excursions thermiques et aux tolérances mécaniques en cours d'utilisation,
la lèvre (130) comportant un chanfrein (160) avec un premier arrondi (162) et un deuxième arrondi (164) adjacent à une entrée (166) d'un passage de dilution (116A) défini par l'œillet (151),
**caractérisé en ce que** le panneau de revêtement (72, 74) comprend en outre un troisième arrondi (170) au niveau d'une sortie (172) du passage de dilution (116A), dans lequel le troisième arrondi (170) est situé adjacent à la sortie (172) du passage de dilution (116A) pour intégrer une surface de paroi d'alésage interne (174) du passage de dilution (116A) dans le côté chaud (112), dans lequel les premier, deuxième et troisième arrondis (162, 164, 170) facilitent l'application d'une couche qui augmente la durée de vie à l'oxydation du panneau de revêtement (72, 74).

2. Panneau de revêtement (72, 74) selon la revendication 1, dans lequel l'œillet (151) est formé dans le panneau de revêtement (72, 74).

3. Panneau de revêtement (72, 74) selon la revendication 1 ou 2, dans lequel ladite lèvre (130) est conçue pour s'étendre au-dessus de la coque de support (68, 70) lorsque le panneau de revêtement (72, 74) est monté dessus.

4. Panneau de revêtement (72, 74) selon une quelconque revendication précédente, dans lequel le chanfrein (160) est d'environ 45 degrés par rapport à un axe central du passage de dilution (116A).

5. Panneau de revêtement (72, 74) selon une quelconque revendication précédente, dans lequel le premier arrondi (162) est intégré dans une surface de la lèvre (130) qui est parallèle au bossage d'étanchéité (132).

6. Panneau de revêtement (72, 74) selon une quelconque revendication précédente, dans lequel le second arrondi (164) est intégré dans une surface de paroi d'alésage interne du passage de dilution (116A).

7. Panneau de revêtement (72, 74) selon une quelconque revendication précédente, dans lequel l'œillet (151) fait partie intégrante du panneau de revêtement (72, 74).

8. Panneau de revêtement (72, 74) selon une quelconque revendication précédente, comprenant en outre une couche sur l'œillet (151).

9. Panneau de revêtement (72, 74) selon la revendication 8, dans lequel la couche est une couche de protection thermique.

10. Panneau de revêtement (72, 74) selon la revendication 9, dans lequel la couche de protection thermique comporte une couche de liaison et une couche de finition.

11. Panneau de revêtement (72, 74) selon une quelconque revendication précédente, dans lequel l'œillet (151) et le panneau de revêtement (72, 74) sont moulés d'un seul tenant.
